# EUROPEAN PATENT APPLICATION

(11) **EP 0 914 950 A2**
(43) Date of publication of application: **12.05.1999**
(21) Application number: 98120262.5
(22) Date of filing: 26.10.1998
(51) Int. Cl.: B41J 2/155

(54) **An ink jet printhead assembled from partial width array printheads**

(30) Priority: 06.11.1997 US 965316
(71) Applicant: Xerox Corporation, Rochester, New York 14644 (US)
(72) Inventor: Koehler, Richard F.jr., New York 14580 (US); Charlton, Joseph F., Pittsford, New York 14534 (US); Orlowski, Thomas E., Fairport, New York 14450 (US)
(74) Representative: Grünecker, Kinkeldey, Stockmair & Schwanhäusser Anwaltssozietät

(57) **Abstract**

An ink jet printhead (10) is formed by assembling a plurality of partial width array printheads (12) into at least two fixed parallel rows, in which the partial width array printheads in each row are staggered from each other. The length of the rows of staggered partial width array printheads provide for either extended swath or full pagewidth printing capability. The overlapping end portions of each partial width array printhead have an equal number of nozzles (14) or droplet ejecting locations therein which are in substantial alignment with each other. A pixel location is assigned to each nozzle or droplet ejecting location with the same pixel location being aligned to the substantially aligned nozzles or droplet ejecting locations in the overlapping end portions of the partial width array printheads. Each pixel location requires multiple ink droplets in the range of zero to a fixed total from its assigned nozzles or droplet ejecting locations. By dividing the total number of ink droplets to be directed to a pixel location between the nozzles or droplet ejecting locations which share a pixel location and changing the ratio of the total number of droplets between the nozzles or droplet ejecting locations, these regions of the full width array printhead smooth out the normal stitch effect generally present in extended or full width array printheads which are assembled from subunits, so that the mechanical alignment tolerance can be relaxed between the partial width array printheads without sacrificing print quality.

## Description

This invention relates to ink jet printing systems, and more particularly to an extended or full width array printhead which has been assembled from at least two rows of staggered partial width array printheads.

Conventional ink jet printing systems use various different methods to produce ink droplets directed toward a recording medium. Well known devices for ink jet printing include thermal, piezoelectric, and acoustic ink jet printheads. All of these technologies produce roughly spherical ink droplets having a 15 to 100 µm diameter which are directed toward a recording medium at velocities between 2-10 m/sec. Printers of the type having full width array printheads generally have a fixed printhead and move the recording medium past the fixed printhead at a constant velocity, and the printer's microcomputer or controller selectively activates the printhead transducers or actuators to eject ink droplets onto the moving recording medium in response to receipt of information bearing data signals. By controlling the activation of the transducers or actuators relative to the continually moving recording medium, the printer controller directs the ejected ink droplets to impact the recording medium in a specific pattern, thus forming an image on the recording medium.

Printers having full width array printheads are capable of faster printing than printers having a partial width array printhead. This is because the partial width array printhead must be reciprocated back and forth across a stationary recording medium to print swaths of images thereon and then step the recording medium after each swath of image is printed a distance equal to the swath height, while the full width array printhead prints across the entire width of the recording medium at one time and does not have to pause the printing process for the recording medium to be stepped. Unfortunately, full width array printheads are costly to manufacture in one unitary printhead, and any one of many nozzles or droplet ejecting actuator therefor which fails to operate properly causes the loss of the entire full width array printhead. Therefore, most full width array printheads are assembled from partial width array printheads which are either abutted end-to-end or staggered in two rows, as disclosed, for example, in US-A-5,198,054 and US-A-5,160,945, respectively.

In either case, the mechanical assembly tolerances are tight and tight mechanical tolerances mean high manufacturing costs. The tight mechanical assembly tolerances are necessary, for the adjacent end nozzles in either abutted arrays or the overlapping nozzles in staggered arrays must substantially maintain the same center-to-center spacing of the nozzles between the end nozzles in each adjacent partial width array printhead as in the center-to-center spacing of the nozzles within the same partial width array printhead. Otherwise, there would be printing artifacts, such as, for example, gaps for too much distance between the end nozzles or lines produced when the printed droplets overlap at the interfaces between partial width arrays. Such interfaces between partial width array printheads assembled into full width array printheads are generally referred to as 'stitch points' or 'stitching'.

US-A-5,198,054 discloses a fabricating process for pagewidth reading and/or writing bars assembled from subunits, such as ink jet printhead subunits. At least two lengths of subunits are cut and placed in corresponding containers. An assembly robot takes the subunits from one of the containers and places the subunits in abutted, end-to-end fashion on an alignment fixture and checks the accumulated positional error of the subunits as they are being assembled. When the robot detects an error exceeding a preset limit, it chooses a subunit of from one of the other containers to compensate for the detected error.

US-A-5,057,854 discloses a modular partial bar having a substrate with a length and a plurality of printhead subunits attached to one side of the substrate, each printhead subunit being spaced from an adjacent printhead subunit. These modular partial bars are used as building blocks to form full width staggered array printheads.

US-A-5,160,945 discloses a pagewidth printhead assembled from fully functional roofshooter type printhead subunits. The printhead subunits are fixedly mounted on one side of a structural bar. Ink is supplied to the printhead subunits by a passageway in the structural bar. The size of the printing zone for color printing is minimized because the roofshooter type printhead subunits for each color of ink are mounted on the edge of a structural bar and then the structural bars, one for each color, are stacked on top of each other.

It is an object of the invention to produce a full width array or extended width array printhead from a plurality of partial width array printheads which have been assembled into two staggered rows and enabling reduced mechanical alignment tolerances between adjacent staggered partial width array printheads by requiring that each pixel be printed with multiple ink droplets and using ink droplets from each of the overlapping nozzles or droplet ejecting locations at the stitch points to print the pixels. A full width array printhead is generally fixed and prints entirely across a constantly moving record medium, and an extended width array printhead contains a plurality of partial width array printheads, but fewer than a full width array printhead and is generally not fixed. An extended width array printhead functions similarly to a single partial width array printhead, but prints a larger swath on a stationary recording medium which is subsequently stepped by the distance of the swath before the next swath is printed.

In one aspect of the invention, there is provided an ink jet printhead assembled from a plurality of partial width array printheads having relaxed mechanical alignment tolerances between the partial width array printheads, comprising: a plurality of partial width array printheads assembled nearly in at least two parallel rows, the partial width array printheads in each of the at least two rows being separated from each other and the partial width array printheads in one row being offset from the partial width array printheads in the other row, so that the partial width array printheads in the two rows are arranged in a staggered fashion with their end portions overlapping, the partial width array printheads in the two rows extending for a distance sufficient to provide extended or full width printing capability; each partial width array printhead having at least one linear array of droplet ejecting locations, the droplet ejecting locations in each partial width array printhead in each of said at least two rows being collinear with the collinear droplet ejecting locations in one row being parallel with the collinear droplet ejecting locations in the other row, the overlapping end portions of each partial width array having an equal number of overlapping droplet ejecting locations; each droplet ejecting location being adapted to eject a plurality of ink droplets to an assigned pixel location with the overlapping droplet ejecting locations being assigned to the same pixel location; and means to adjust the number of ink droplets ejected from each of the overlapping droplet ejecting locations, so that the total number of droplets required for a pixel location are divided between the overlapping droplet ejecting locations which are assigned to the same pixel location.

In another aspect of the invention, there is provided a method of printing by an ink jet printhead assembled from a plurality of partial width array printheads, so that the mechanical tolerances between the partial width array printheads may be relaxed without impacting print quality, comprising the steps of: assembling a plurality of partial width array printheads in at least two linear parallel rows which extend for a distance sufficient to provide an extended or a full width printing capability, each partial width array printhead having at least one linear array of droplet ejecting locations; spacing the partial width array printheads in the same row from each other with the droplet ejecting locations therein being collinear; offsetting the partial width array printheads in different rows from each other, so that the partial width array printheads in the different rows are staggered from each other with overlapping end portions; aligning the overlapping end portions of the partial width array printheads such that each overlapping end portion has an equal number of droplet ejecting locations, with the droplet ejecting locations in each of the overlapping end portions being in substantial alignment with each other; assigning a pixel location for each droplet ejecting location, with the substantially aligned droplet ejecting locations in each of the overlapping end portions being assigned to and sharing the same pixel location; requiring that each pixel location be capable of receiving a range of ink droplets from the assigned droplet ejecting locations from zero to a fixed total; and dividing the number of ink droplets for the shared pixel locations between the droplet ejecting locations in the overlapping end portions of the partial width array printheads assigned thereto, so that the mechanical alignment tolerance between overlapping partial width array printheads may be relaxed.

The present invention will now be described by way of example with reference to the accompanying drawings, wherein like reference numerals refer to like elements and in which:
Fig. 1 is a schematic front elevation view of a portion of the printhead of the present invention which has been assembled from a plurality of partial width array printheads;
Fig. 2 is an enlarged view of the overlapping end portions of the two staggered partial width array printheads enclosed in dashed line and identified by the numeral 2 in Fig. 1; and
Fig. 3 is a graphical representation of the droplets per pixel versus pixel positions at the stitch points or overlapping regions of the partial width array printheads which make up the printhead of Fig. 1.

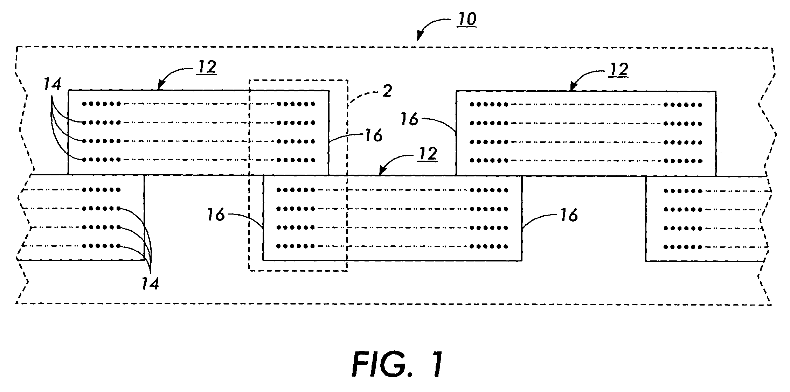

In Fig. 1, a schematic front view of a portion of a multicolor printhead 10 is shown in dashed line. The printhead 10 comprises a plurality of partial width array printheads 12 assembled in at least two parallel rows. Each partial width array printhead has at least four rows of nozzles 14 or, in the case of the nozzleless acoustic ink jet printheads disclosed, for example, in US-A-4,697,195, the partial width array printhead has at least four rows of droplet ejecting locations 14. Each row of nozzles or droplet ejecting locations 14 eject a different color of ink, viz., black, yellow, magenta, and cyan, and when more than four rows of droplet ejecting locations are used, at least one of the ink colors is duplicated. The partial width array printheads in each of the two rows are equally spaced from each other and the partial width array printheads in one row are offset from the partial width array printheads in the other row, with the end portions 16 of adjacent partial width array printheads in the two different rows overlapping each other. For monochrome printing, of course, each partial width array printhead may have only one row of nozzles or droplet ejecting locations. However, any number of rows of nozzles can be used for monochrome printing; the more rows available, the faster the printhead can print. An additional side benefit is that with more rows, a lower addressing frequency can be used for the same print speed.

Each partial width array printhead 12 has an equal number of droplet ejecting locations or nozzles 14 per row and an equal number of droplet ejecting locations or nozzles per printhead with an equal number of droplet ejecting locations or nozzles in each of the printhead end portions 16 that overlap. The droplet ejecting locations or nozzles in each row are collinear and the collinear rows of nozzles or droplet ejecting locations are parallel with each other. Also, the collinear nozzles for ejecting the same color of ink in the partial width array printheads in each row are collinear. A sufficient number of staggered partial width array printheads 12 are assembled to provide for extended width printing or page width printing, and when sufficient for page width printing, such a printhead is referred to as a full width array printhead. An extended width array printhead is one which has a plurality of partial width array printheads but the rows of such printheads do not contain enough partial width array printheads to print across the width of a page. An extended width array printhead functions similarly to a partial width array printhead, but is able to print a larger swath of information. This invention will be described in the embodiment of a full width array printhead, but it is understood that it equally applies to an embodiment of an extended width array printhead. The main difference between the two embodiments is the length of the printheads.

A nozzle or droplet ejecting location 14 for each color of ink in each partial width array printhead is assigned a pixel location, so that multiple droplets of ink of each color may impact the same pixel location to produce the desired color for that pixel. However, the nozzles or droplet ejecting locations 14 for each color of ink in each of the two adjacent overlapping end portions 16 of the partial width array printheads 12 are assigned the same pixel location and the number of ink droplets to be directed to the pixel are divided or apportioned between the two overlapping end portions.

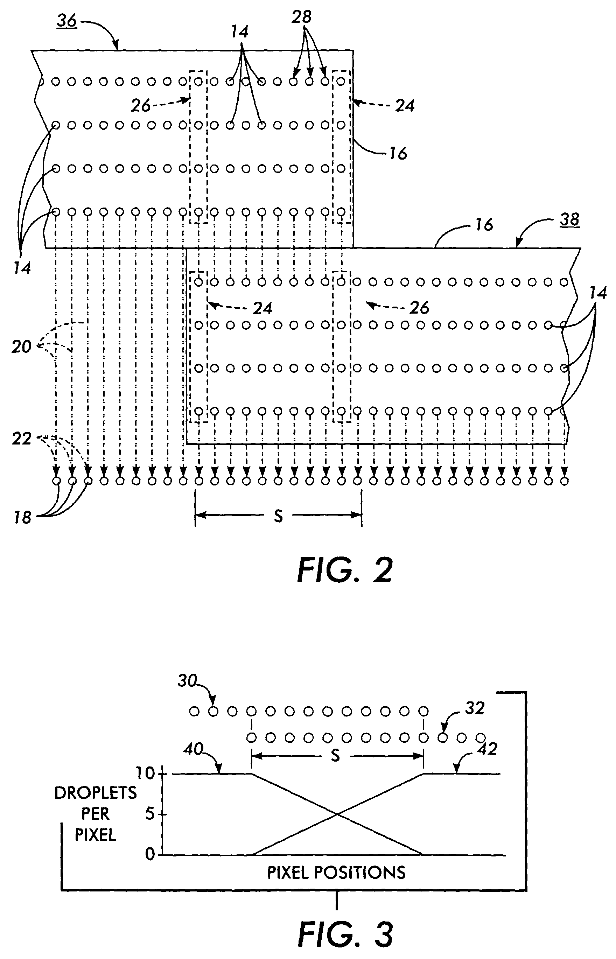

Referring to Fig. 2, the same number of nozzles or droplet ejecting locations 14 are in each adjacent overlapping end portion 16 of the partial width array printheads 12 and a column of the four nozzles or droplet ejecting locations, one for each color, in each printhead are somewhat aligned with each other and assigned a common pixel location 18. In the preferred embodiment, the number of columns of four nozzles or droplet ejecting locations each is between ten and twenty for each overlapping end portion, with ten being shown in the Figures. When multiple ink droplets are required from each nozzle or droplet ejecting location for each pixel location, the number of droplets from each nozzle or droplet ejecting location having a common pixel assignment may be varied to provide a smooth transition from one partial width array printhead to another. The transition between partial width array printheads is commonly referred to as a stitch region or stitching, as will be explained in greater detail below.

Any type of droplet-on-demand, partial width array printhead could be used to provide a full width array printhead in accordance with the present invention, provided that each pixel is printed with multiple ink droplets from each nozzle. One type of printhead which lends itself to multiple ink droplets from one droplet ejecting location for each pixel is an acoustic ink jet printhead as described, for example, in US-A-4,697,195 and US Application Number 08/337,913 filed by Quate et al on 14 November 1994. Accordingly, it is the acoustic ink jet type printhead which is contemplated for the preferred embodiment. The very small ink droplets which are ejected from the acoustic ink jet printhead, in the range of two to four picoliters and having a diameter of about 15 µm, enable up to ten droplets to be ejected from each droplet ejecting location of the printhead and directed to the same pixel location on the recording medium.

Fig. 2 is an enlarged view of the portion of the printhead 10 shown in Fig. 1 that is enclosed in a dashed line and identified by the numeral 2. In this view, the overlapping end portions 16 of two partial width array printheads 12, one partial width array printhead from each row, show that a relatively loosely toleranced alignment of each of the columns of four nozzles or droplet ejecting locations 14 therein provide the stitch region 'S' and that the aligned columns in each partial width array printhead, as indicated by the center lines 20, are assigned a common pixel location 18, as indicated by the arrows 22. In this embodiment, the last ten nozzles or droplet ejecting locations of each adjacent end portion overlap forms the stitch region 'S'. The multiple droplets per pixel for these ten pixels are delivered from both end portions of the partial width array printheads. The number of droplets from the two end portions adds up to the total number of droplets required by the image. The fraction of droplets from each end portion is reduced to zero for the last column 24 of nozzles or droplet ejecting locations in the respective partial width array printhead (enclosed in dashed line), and is the full number at the column 26 in the tenth position from the end thereof (also enclosed in dashed line). The printer controller (not shown) scales the droplets to smooth out the stitch region based upon a set of calibration groundrules established during manufacture of the extended or full width array printhead. The calibration of the stitch region may be checked periodically by a technical representative during maintenance procedures or by the printer user based upon a set of calibration targets which are printed and viewed or by a set of calibration targets which are scanned in.

The scaling of the number of droplets per pixel from zero to the full number for each of the overlapping end portions of the partial width array printheads provides a leveling or soft transition from one partial width array printhead to the next one and will minimize or eliminate the normal stitch defect in printed images, which are generally in the form of vertical gaps or overprinting. This soft transition is often referred to as a 'soft stitch'. Fig. 3 shows a graphical representation of the stitch region 'S' of the present invention, in which the number of droplets per pixel from one adjacent printhead end portion varies with the other printhead end portion for the pixel locations in the stitch region. In this embodiment, the overlapping end portions each contain the last ten columns of nozzles or droplet ejecting locations in the partial width array printhead, with each column having four nozzles or droplet ejecting locations, one for each color; i.e., black, yellow, magenta, and cyan. Referring also to Fig. 2, the last ten columns of nozzles or droplet ejecting locations in one partial width array printhead are aligned with the ten columns of nozzles or droplet ejecting locations in the adjacent other partial width array printhead with a relatively loose tolerance of about +/- 50 µm between centers of the columns. The ten columns of overlapping nozzles or droplet ejecting locations form the stitch region S, and the somewhat aligned columns print a common pixel.

In Fig. 3, for ease of understanding the invention, the pixels 30 printed by the end portion of a first partial width array printhead have been separated from the pixels 32 printed by the end portion of a second partial width array printhead. In this embodiment, the nozzles or droplet ejecting locations are capable of delivering ten ink droplets each per pixel. Referring also to Fig. 2, the very end column 24 of nozzles or droplet ejecting locations eject zero ink droplets while its aligned tenth column 26 from the end eject the full number of ink droplets called for by the image. The number of droplets from the two printheads adds up to the total number of droplets called for by the image. The fraction of droplets from each column of nozzles or droplet ejecting locations from each printhead is varied between them. The next to last column ejects 10% of the required droplets, while its associated ninth column from the end in the other printhead ejects 90% of the required droplets, and so on for the remaining ten columns of nozzles or droplet ejecting locations in the overlapping end portions. This is graphically illustrated by the graph in Fig. 3 which assumes all ten ink droplets are required by each pixel location for ease of understanding the scaling of the droplets from each printhead end portion. The graph 40 of the droplets from the first printhead 36 shows a 10% drop in the ejected ink droplets from each column of nozzles or droplet ejecting locations beginning with the ninth column and continuing until the last column where zero droplets are ejected. The graph 42 of the droplets from the second printhead 38 shows a 10% gain in the ejected ink droplets from each column of nozzles or droplet ejecting locations starting with the next to last column and continuing to the tenth column from the end where 100% of the droplets are ejected to its assigned pixel location. This smooth variation in the ejected ink droplets from the printhead end portions which share common pixel locations provides a soft transition from one partial width array printhead to the next and minimizes or eliminates the normal stitch defect mentioned above.

With the eased alignment tolerance requirements between partial width array printheads 12 enabled by the soft stitching of multiple droplets ejected from the each nozzle or droplet ejecting location 14 in the overlapping end portions 16 of the printheads for each pixel location 18, high quality printing from extended or full width array printheads 10 assembled from partial width array printheads 12 are achievable at a cost much less than would be otherwise necessary for rigid, tight tolerance mechanical alignment taught by prior art techniques. The four rows of nozzles or droplet ejecting locations 14 of a partial width array printhead are aligned in columns 28 (Fig. 2) with very tight tolerances. It is the alignment between printheads which are costly and difficult to maintain. Thus, this invention enables droplet placement alignment by ejection timing of the droplets in the stitch regions to further simplify the mechanical setup of a full width array printhead assembled from partial width array printheads.

The printhead of the present invention also provides for high speed highlight color by using two rows of nozzles or droplet ejecting locations for black ink and the other two rows of nozzles or droplet ejecting locations for a single highlight color, so that the print rate could by doubled. Another advantage of this inventive printhead, is that individual partial width array printheads could be replaced, because the extended or full width array printhead could be recalibrated to vary the number of droplets from the overlapping end portions of the newly installed partial width array printhead to make the image produced in the stitch region less noticeable to the human eye, even if columns of nozzles or droplet ejecting locations of the new printhead is slightly different.

## Claims

1. An ink jet printhead assembled from a plurality of partial width array printheads having relaxed mechanical alignment tolerances between the partial width array printheads, comprising:
a plurality of partial width array printheads assembled linearly in at least two parallel rows, the partial width array printheads in each of the at least two rows being separated from each other and the partial width array printheads in one row being offset from the partial width array printheads in the other row, so that the partial width array printheads in the two rows are arranged in a staggered fashion with their end portions overlapping, the partial width array printheads being in at least two rows to provide an extended width printing capability;
each partial width array printhead having at least one linear array of droplet ejecting locations, the droplet ejecting locations in each partial width array printhead in each of said at least two rows being collinear with the collinear droplet ejecting locations in one row being parallel with the collinear droplet ejecting locations in the other row, the overlapping end portions of each partial width array having an equal number of overlapping droplet ejecting locations;
each droplet ejecting location being adapted to eject a plurality of ink droplets to an assigned pixel location with the overlapping droplet ejecting locations being assigned to the same pixel location; and
means to adjust the number of ink droplets ejected from each of the overlapping droplet ejecting locations, so that the total number of droplets required for a pixel location are divided between the overlapping droplet ejecting locations which are assigned to the same pixel location.

2. The ink jet printhead as claimed in claim 1, wherein the at least two rows of partial width arrays extend for a distance sufficient to provide a full width printing capability.

3. The ink jet printhead as claimed in claim 1, wherein each partial width array printhead has at least four rows of droplet ejecting locations, the droplet ejecting locations being aligned with each other in columns; and wherein the overlapping and portions have between ten and twenty overlapping columns of droplet ejecting locations.

4. The ink jet printhead as claimed in claim 3, wherein the number of ink droplets ejected from each droplet ejecting location of each overlapping end portion of adjacent partial width array printheads are scaled from zero to the full number of droplets required for the commonly assigned pixel locations, in order to provide a leveling transition from one partial width array printhead to another, thereby minimizing normal stitching defects.

5. A method of printing from an ink jet printhead assembled from a plurality of partial width array printheads, so that the mechanical tolerances between the partial width array printheads may be relaxed without impacting print quality, comprising the steps of:
assembling a plurality of partial width array printheads in at least two linear parallel rows which extend for a distance sufficient to provide an extended width printing capability, each partial width array printhead having at least one linear array of droplet ejecting locations;
spacing the partial width array printheads in the same row from each other with the droplet ejecting locations therein being collinear;
offsetting the partial width array printheads in different rows from each other, so that the partial width array printheads in the different rows are staggered from each other with overlapping end portions;
aligning the overlapping end portions of the partial width array printheads such that each overlapping end portion has an equal number of droplet ejecting locations, with the droplet ejecting locations in each of the overlapping end portions being in a loosely toleranced alignment with each other;
assigning a pixel location for each droplet ejecting location, with the aligned droplet ejecting locations in each of the overlapping end portions being assigned to and sharing the same pixel location;
requiring that each pixel location be capable of receiving a range of ink droplets from the assigned droplet ejecting locations from zero to a fixed total; and
dividing the number of ink droplets for the shared pixel locations between the droplet ejecting locations in the overlapping end portions of the partial width array printheads assigned thereto, so that the mechanical alignment tolerance between overlapping partial width array printheads may be relaxed.

6. The method as claimed in claim 5, wherein the at least two rows of partial width array printheads extend for a distance sufficient to provide for full width array printing.

7. The method as claimed in claim 6, wherein each partial width array printhead has at least four rows of droplet ejecting locations, each row of droplet ejecting locations ejecting a different color of ink, the droplet ejecting locations in each row being aligned with the droplet ejecting locations in the other rows to form columns; and wherein the overlapping end portions of the partial width array printheads have between ten and twenty overlapping columns of droplet ejecting locations which are aligned with an eased tolerance.

8. The method as claimed in claim 7, wherein the number of ink droplets ejected form each droplet ejecting location of each overlapping end portion of adjacent, staggered partial width array printheads are scaled from zero to the full number of droplets required for the commonly assigned pixel locations in order to provide a leveling transition from one partial width array printhead to the other, thereby minimizing normal stitching defects and enabling reduced mechanical alignment tolerances between adjacent partial width array printheads.
